# EUROPEAN PATENT APPLICATION

(11) **EP 3 096 578 A1**
(43) Date of publication of application: **23.11.2016**
(21) Application number: 15736933.1
(22) Date of filing: 13.01.2015
(51) Int. Cl.: H04W 72/04, H04J 11/00, H04W 28/06

(54) **USER TERMINAL, WIRELESS BASE STATION, AND WIRELESS COMMUNICATION METHOD**

(30) Priority: 14.01.2014 JP 2014004181
(71) Applicant: NTT DOCOMO, INC., Chiyoda-ku Tokyo 100-6150 (JP)
(72) Inventor: TAKEDA, Kazuki, Tokyo 100-6150 (JP); UCHINO, Tooru, Tokyo 100-6150 (JP); TAKEDA, Kazuaki, Tokyo 100-6150 (JP); NAGATA, Satoshi, Tokyo 100-6150 (JP)
(74) Representative: Hoffmann Eitle
(86) International application number: PCT/JP2015/050570
(87) International publication number: WO 2015/108007

(57) **Abstract**

The present invention is designed to improve throughput and support various modes of use of radio communication systems when TDD is used in an environment in which the data traffic is unevenly concentrated on the downlink. A user terminal carries out radio communication with a TDD cell, and has a transmitting/receiving section that transmits and receives signals by using a UL/DL configuration, which includes a special subframe formed with a downlink time duration, a guard period and an uplink time duration, and in which DL communication is carried out in all subframes, and a control section that configures the uplink time duration to constitute the special subframe to at least three symbols or more, and controls the allocation of uplink signals.

## Description

### Technical Field

The present invention relates to a user terminal, a radio base station and a radio communication method that are applicable to a next-generation communication system.

### Background Art

In the UMTS (Universal Mobile Telecommunications System) network, the specifications of long term evolution (LTE) have been drafted for the purpose of further increasing high speed data rates, providing lower delays and so on (see non-patent literature 1). In LTE, as multiple-access schemes, a scheme that is based on OFDMA (Orthogonal Frequency Division Multiple Access) is used in downlink channels (downlink), and a scheme that is based on SC-FDMA (Single Carrier Frequency Division Multiple Access) is used in uplink channels (uplink). Also, successor systems of LTE (referred to as, for example, "LTE-advanced" or "LTE enhancement" (hereinafter referred to as "LTE-A")) have been developed for the purpose of achieving further broadbandization and increased speed beyond LTE, and the specifications thereof have been drafted (Re. 10/11).

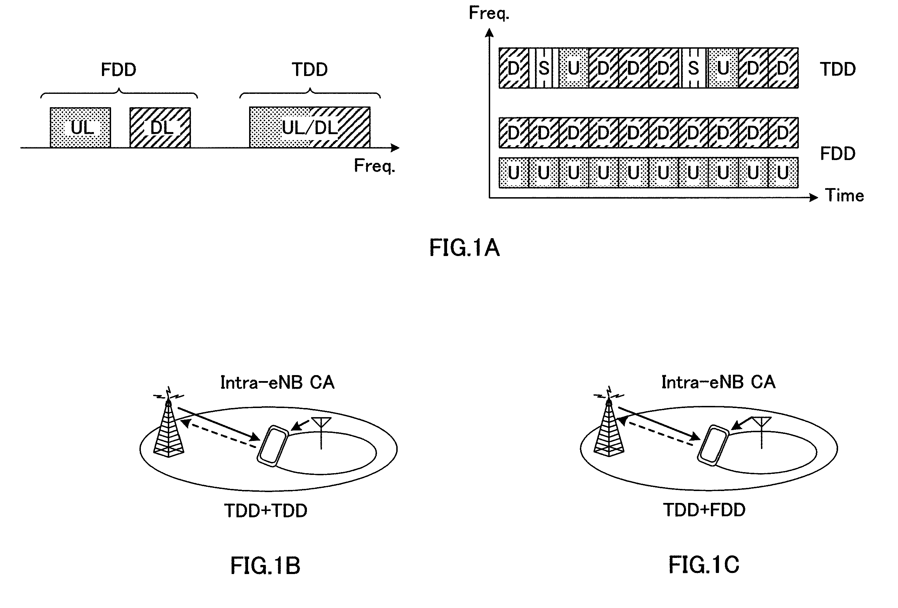

As duplex modes for radio communication in LTE and LTE-A systems, there are frequency division duplex (FDD) to divide between the uplink (UL) and the downlink (DL) based on frequency, and time division duplex (TDD) to divide between the uplink and the downlink based on time (see FIG. 1 A). In the event of TDD, the same frequency region is employed in both uplink and downlink communication, and signals are transmitted and received to and from one transmitting/receiving point by dividing between the uplink and the downlink based on time.

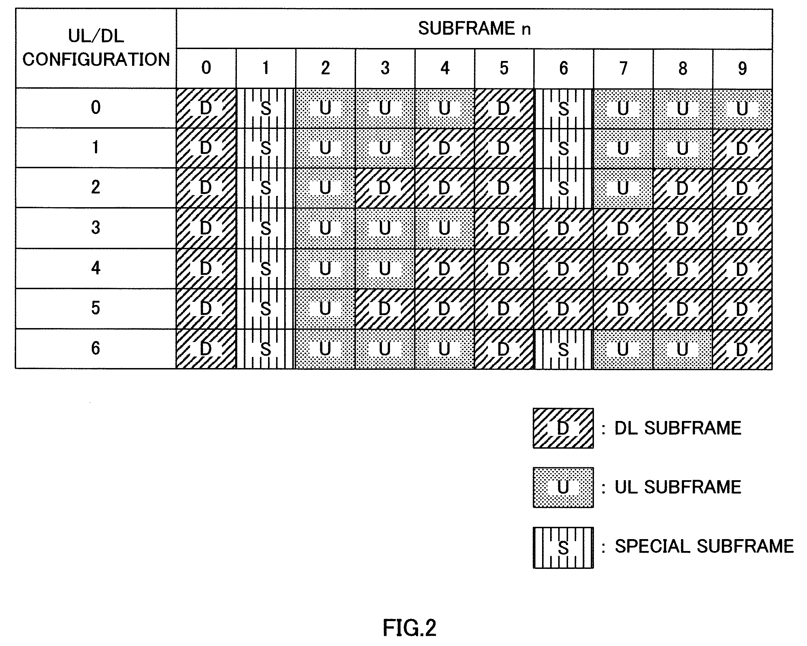

In TDD in LTE systems, a plurality of frame configurations (UL/DL configurations) with varying transmission ratios between uplink subframes and downlink subframes are stipulated. To be more specific, as shown in FIG. 2, seven frame configurations -- namely, UL/DL configurations 0 to 6 -- are stipulated, where subframes #0 and #5 are allocated to the downlink, and subframe #2 is allocated to the uplink. In each UL/DL configuration, a special subframe is configured where a switch is made from DL to UL.

Also, the system band of LTE-A systems (Rel. 10/11) includes at least one component carrier (CC), where the system band of LTE systems constitutes one unit. Gathering a plurality of component carriers (cells) to make a wide band is referred to as "carrier aggregation" (CA).

### Citation List

### Non-Patent Literature

Non-Patent Literature 1:3GPP TS 36. 300 "Evolved UTRA and Evolved UTRAN Overall Description"

### Summary of Invention

### Technical Problem

When carrier aggregation (CA), which was introduced in Rel. 10, is employed, in TDD, geographically-neighboring transmitting points are confined to the use of the same UL/DL configuration in a given frequency carrier in order to prevent interference between a plurality of CCs (also referred to as "cells," "transmitting/receiving points," etc.). However, generally speaking, DL traffic and UL traffic are asymmetrical. Also, the ratio between DL traffic and UL traffic is not constant, and varies over time or between locations. So, in order to enable flexible switching of UL/DL configurations in accordance with traffic, Rel. 11 provided support for CA (TDD inter-band CA) to employ different UL/DL configurations between different cells.

Also, in carrier aggregation (CA) in Rel. 10/11, the duplex modes to apply between a plurality of CCs need to be the same duplex mode (see FIG. 1B). On the other hand, future radio communication systems (for example, Rel. 12 and later versions) may anticipate CA to employ different duplex modes (TDD+FDD) between multiple CCs (see FIG. 1C).

Provided that the mode of use of these radio communication systems have been growing in variety, there is an even stronger demand for controlling UL communication and DL communication flexibly taking into account traffic and so on. For example, there is a demand to optimize throughput when TDD is used in an environment where the data traffic is unevenly concentrated on the downlink. However, when existing mechanisms (for example, existing UL/DL configurations in TDD) are used in new modes of use of radio communication systems, there is a threat of making it difficult to improve throughput, support new modes of use and so on.

The present invention has been made in view of the above, and it is therefore an object of the present invention to provide a user terminal, a radio base station and a radio communication method, which can improve throughput, and which furthermore can support various modes of use of radio communication systems when TDD is used in an environment in which the data traffic is unevenly concentrated on the downlink.

### Solution to Problem

The user terminal according to the present invention provides a user terminal that carries out radio communication with a TDD cell, and this user terminal has a transmitting/receiving section that transmits and receives signals by using a UL/DL configuration, which includes a special subframe formed with a downlink time duration, a guard period and an uplink time duration, and in which DL communication is carried out in all subframes, and a control section that configures the uplink time duration to constitute the special subframe to at least three symbols or more, and controls the allocation of uplink signals.

### Advantageous Effects of Invention

According to the present invention, it is possible to improve throughput and furthermore support various modes of use of radio communication systems when TDD is used in an environment in which the data traffic is unevenly concentrated on the downlink.

### Brief Description of Drawings

FIGs. 1 provide diagrams to explain an overview of duplex modes in LTE and LTE-A, and intra-base station CA (intra-eNB CA);
FIG. 2 is a diagram to show UL/DL configurations for use in TDD cells of existing systems;
FIGs. 3 provide diagrams to show examples of UL/DL configurations 7 for DL communication, for use in TDD cells;
FIGs. 4 provide diagrams to show examples of system structures where CA is applied to cells that operate in licensed areas and cells that operate in unlicensed areas;
FIGs. 5 provide diagrams to show existing special subframe configurations;
FIG. 6 is a diagram to show examples of special subframe configurations for use in TDD cells according to an embodiment;
FIG. 7 is a diagram to show other examples of special subframe configurations for use in TDD cells according to an embodiment;
FIG. 8 is a diagram to show examples of a DwPTS, a GP, and an extended UpPTS in a special subframe configuration for use in TDD cells according to an embodiment;
FIGs. 9 provide diagrams to show examples of the method of configuring special subframes including extended UpPTSs;
FIGs. 10 provide diagrams to show other examples of the method of configuring special subframes including extended UpPTSs;
FIGs. 11 provide diagrams to show a case where the length of the GP and the length of the UpPTS in a special subframe configuration are changed based on a command from a radio base station;
FIG. 12 is a diagram to show a case where the length of the UpPTS in a special subframe configuration is changed based on the TA value or MCS;
FIGs. 13 provide diagrams to show a case where the length of the DwPTS and the length of the UpPTS in a special subframe configuration are changed based on a command from a radio base station;
FIG. 14 is a diagram to show examples of operation timing control pertaining to uplink signals to transmit in UL subframes of existing UL/DL configuration 5;
FIG. 15 is a diagram to show examples of operation timing control pertaining to uplink signals to transmit in special subframes of a new UL/DL configuration 7;
FIG. 16 is a schematic diagram to show an example of a radio communication system according to the present embodiment;
FIG. 17 is a diagram to explain an overall structure of a radio base station according to the present embodiment;
FIG. 18 is a diagram to explain a functional structure of a radio base station according to the present embodiment;
FIG. 19 is a diagram to explain an overall structure of a user terminal according to the present embodiment; and
FIG. 20 is a diagram to explain a functional structure of a user terminal according to the present embodiment.

### Description of Embodiments

As noted earlier, in LTE and LTE-A systems, two duplex modesnamely, FDD and TDD -- are stipulated (see FIG. 1A). Also, in TDD, communication is carried out between a radio base station and a user terminal by using a predetermined UL/DL configuration that is selected from UL/DL configurations 0 to 6 shown in above FIG. 2. In this way, in TDD, the transmission ratio of UL subframes and DL subframes varies per UL/DL configuration, and the delivery acknowledgement signal (A/N) feedback mechanism (HARQ mechanism) and others are stipulated for each configuration.

On the other hand, future radio communication systems (for example, Rel. 12 and later versions) may anticipate CA to employ different duplex modes (TDD+FDD) between multiple CCs (see FIG. 1C). In this case, it may be possible to employ UL/DL configurations 0 to 6 in cells where TDD is employed (hereinafter also referred to as "TDD cells"), as in existing systems (for example, Rel. 10/11). However, when CA is employed between a plurality of cells including TDD cells, there is a threat that it is difficult to optimize the throughput with existing UL/DL configurations.

For example, assume an example in which a predetermined cell among a plurality of cells employing CA is used for DL communication in a communication environment where the DL traffic is heavier than the UL traffic. In this case, if the cell that is selected for DL communication is a cell to employ FDD (hereinafter also referred to as an "FDD cell"), DL communication will be possible in every subframe. On the other hand, if the cell that is selected for DL transmission is a TDD cell, it may be possible to employ the UL/DL configuration in which the configuration ratio of DL subframes is the highest (in FIG. 2, UL/DL configuration 5).

However, even when DL/UL configuration 5 with the highest DL subframe configuration ratio is employed, a UL subframe and a special subframe are included (SF #1 and SF #2). That is, because at least a UL subframe is included in existing UL/DL configurations, when a TDD cell is used for DL communication, there will be subframes that cannot be used in DL data communication (for example, DF #2). As a result of this, sufficient improvement of throughput cannot be achieved. Note that, since a special subframe is formed with a downlink time duration (DwPTS), a guard period (GP) and an uplink time uplink time duration (UpPTS), so that DL communication can be carried out using the DwPTS.

So, the present inventors have focused on the fact that, when CA is carried out using a plurality of cells including TDD cells, it may not be possible to optimize throughput with existing UL/DL configurations, depending on the mode of use of the system, and have been studying the use of new UL/DL configurations. To be more specific, in TDD cells, a UL/DL configuration for DL communication, which enables DL communication in all subframes (hereinafter also referred to as a "UL/DL configuration 7") will be newly introduced in TDD cells. Furthermore, this UL/DL configuration 7 can be suitably applied to cases where a TDD cell is a secondary cell (SCell) (not the primary cell (PCell)).

Here, the primary cell (PCell) refers to the cell that manages RRC connection, handover and so on when CA is executed, and is also a cell that requires UL communication in order to receive data and feedback signals from terminals. When CA is executed, the primary cell is always configured in the uplink and the downlink. A secondary cell (SCell) refers to another cell that is configured apart from the primary cell when CA is employed. A secondary cell may be configured in the downlink alone, or may be configured in both the uplink and the downlink at the same time.

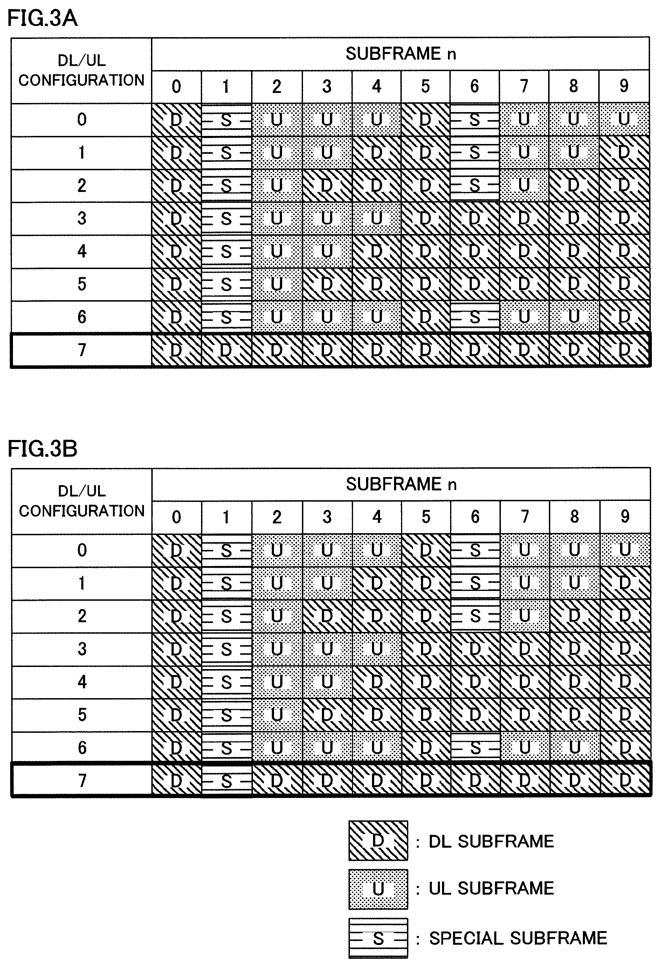

In this way, by employing UL/DL configuration 7 for DL communication depending on the mode of use of radio communication systems, it becomes possible to improve throughput. Note that, with UL/DL configuration 7 for DL communication, the case to provide DL subframes alone (without configuring special subframe) (see FIG. 3A) and the case to provide DL subframes and special subframes (see FIG. 3B) may be possible, depending on the mode of use.

Now, for future radio communication systems, studies are in progress to operate LTE systems not only in frequency bands licensed to businesses (licensed bands), but also in frequency bands where license is not required (unlicensed bands). A licensed band refers to a band in which a specific business is allowed exclusive use, and an unlicensed band refers to a band which is not limited to a specific business and in which radio stations can be provided. Unlicensed bands include, for example, the 2.4 GHz band and the 5 GHz band where WiFi and Bluetooth (registered trademark) can be used, the 60 GHz band where millimeter-wave radars can be used, and so on.

Unlike a licensed band, an unlicensed band is not for use only by a specific business, and therefore there is a possibility that unpredicted interference is produced. For example, there is a possibility that an LTE system and another radio communication system (a weather and aircraft surveillance radar, broadcast, emergency radio, public radio, local radio, WiFi, Bluetooth and so on) operate (that is, share frequencies) in an unlicensed band. In this case, there is a threat that, between the varying radio communication systems, interference that neither radio communication system has predicted will be produced.

In order to reduce the interference between the varying radio communication systems, it may be possible to execute control so that one of the radio communication systems is operated preferentially. For example, there is a possibility that the other radio communication system is stipulated to be prioritized over the LTE system. In this case, if the other prioritized radio system is detected to be in operation in the unlicensed band, communication using the LTE system has to stop.

Also, there is a possibility that varying LTE businesses operate LTE systems by using the same frequency in an unlicensed band. For example, when varying businesses install LTE base stations in close locations and operate these in the same frequency, significant interference is likely to be produced against each other. Consequently, in the mode of use to operate LTE systems by using unlicensed bands, it is necessary, as noted above, to take into account interference and so on.

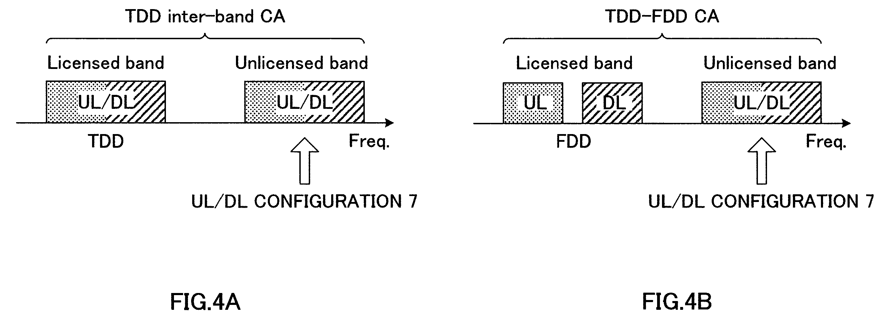

Assuming cases where LTE systems are operated in unlicensed bands, in addition to licensed bands, the present inventors have been contemplating the use of above UL/DL configuration 7 in unlicensed bands (see FIGs. 4). For example, a mode of use to operate an FDD cell in a licensed band and a TDD cell in an unlicensed band (UL/DL configuration 7) and apply CA between the FDD cell and the TDD cell may be possible (see FIG. 4B). Alternatively, a mode of use to operate TDD cells in a licensed band and an unlicensed band and apply CA between the TDD cells may be possible as well (see FIG. 4A).

Licensed bands allow businesses to control interference by operating base stations, and therefore can be used to communicate control signals and data that requires high quality. Meanwhile, despite the possibility that unpredicted interference may be produced, unlicensed bands can use comparatively wide bands, and therefore can be suitably used in data communication (DL communication) in which the traffic of packets and so on is heavy. Consequently, by executing CA by using UL/DL configuration 7 in TDD cells in unlicensed bands, it is possible to realize communication that takes advantages of both licensed bands and unlicensed bands.

Furthermore, in future radio communication systems, it may be possible to operate TDD cells, which have heretofore been used as secondary cells (SCells) as mentioned earlier, as cells that allow connection even when CA is not configured (that is, without requiring communication by the primary cell (PCell) as a precondition). To be more specific, it may be possible to employ cells to allow initial connection from user terminals (stand-alone) or as cells to allow independent scheduling (dual connectivity). Note that cells that operate on a stand-alone basis can establish initial connection with user terminals independently (that is, without being secondary cells (SCells) in CA). Also, dual connectivity refers to the mode in which user terminals connect with a plurality of cells that are scheduled independently (that is, have schedulers).

Although, in such mode of use, UL communication needs to be carried out in TDD cells. the problem in this case is how to use UL/DL configuration 7 and communicate. That is, in order to use UL/DL configuration 7 in stand-alone or in dual connectivity, it is necessary to support uplink channels, uplink reference signals and so on. For example, it is necessary to at least transmit uplink signals such as the PRACH signal, message 3 in random access procedures, higher layer control signals, downlink HARQ-ACK (delivery acknowledgement signal), CQI (channel quality information), SR (scheduling request signal), SRS (channel quality measurement reference signal) and so on, by using UL/DL configuration 7.

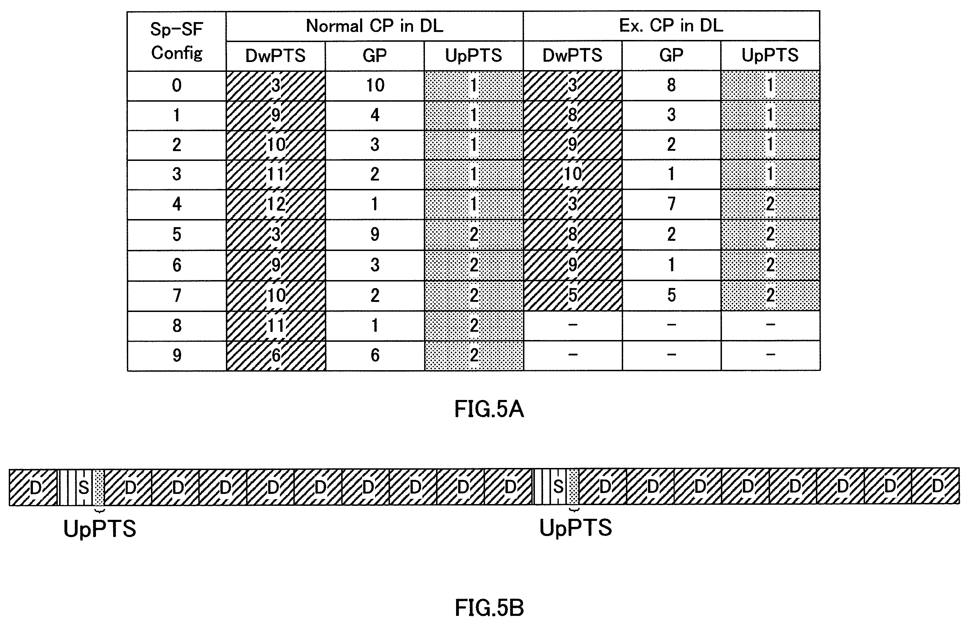

Consequently, it may be possible to use the configuration of above FIG. 3B, which provides uplink timings (includes special subframes), as UL/DL configuration 7. However, in the special subframe configurations of existing LTE systems (Rel. 10/11), it is not possible to transmit uplink signals by using the above-noted uplink time duration (UpPTS). Now, existing special subframe configurations (Sp-SF Configs.) will be described below in detail with reference to FIGs. 5.

In existing LTE systems (Rel. 10/11), ten types special subframe configurations (Sp-SF Configs.) are provided for normal CPs and eight types are provided for extended CPs (see FIG. 5A). Also, information about the special subframe configurations is reported to user terminals by using system information (SIB1) in the primary cell, and by using RRC signaling in secondary cells.

The numbers shown in the table of FIG. 5A are the numbers of OFDM (or SC-FDMA) symbols. In an existing special subframe configuration, the uplink time duration (UpPTS) is configured only up to maximum two symbols. Consequently, it is not possible to transmit user data (PUSCH signals), which is transmitted by using the PUSCH in UL subframes. or uplink control signals (PUCCH signals), which are transmitted by using the PUCCH, and so on. Meanwhile, in existing special subframes, only the transmission of PRACH signals and SRSs is supported for UL communication. Consequently, when above-mentioned UL/DL configuration 7 is used (see FIG. 5B), it is not possible to transmit UL signals (user data, uplink control information and so on) that would be required when operation apart from secondary cells (SCell) is assumed, in existing special subframe configurations.

So, the present inventors have come up with the idea of extending the uplink time duration (UpPTS) in special subframe configurations so as to make it possible to transmit UL signals other than PRACH signals and SRSs even when the UL/DL configurations 7 of FIG. 3B, which contains special subframes, is used.

Now, the radio communication method according to the present embodiment will be described below in detail with reference to the accompanying drawings. Note that, according to the present embodiment, TDD cells to use the UL/DL configuration 7 of FIG. 3B can be used in licensed areas or in unlicensed areas.

### (First Example)

A case will be described with a first example where a special subframe configuration in which the uplink time duration (UpPTS) is extended longer than heretofore is introduced as a special subframe configuration (Sp-SF Config.) for TDD cells.

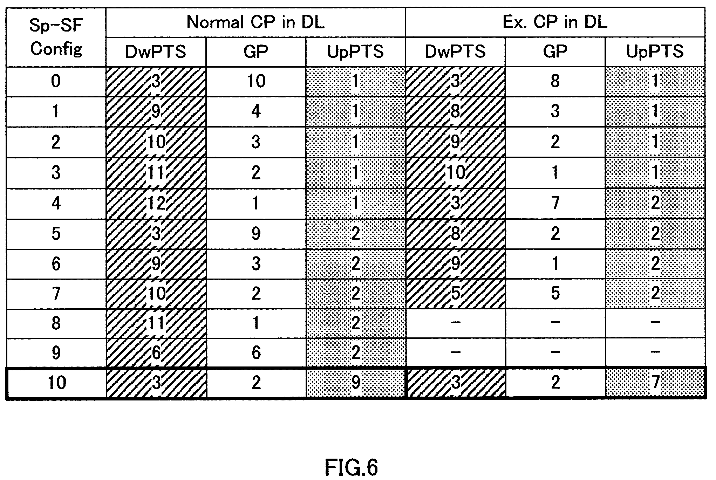

FIG. 6 shows an example of a special subframe configuration according to the present embodiment. FIG. 6 shows a table, in which a special subframe configuration 10 (Sp-SF Config. 10), in which the UpPTS is newly extended, provided as a special subframe configuration, in addition to existing special subframe configurations 0 to 9. The detail of special subframe configuration 10 to be added anew is that the UpPTS is extended longer than heretofore (the UpPTS is at least three symbols or more). Hereinafter, an UpPTS like this will be referred to as an "extended UpPTS."

FIG. 6 shows a case where, as special subframe configuration 10, the DwPTS is "3," the GP is "2," and the UpPTS is "9." That is, the capacity of UL transmission is increased by increasing the number of UpPTS symbols, which has heretofore been 1 or 2, to 9.

By this means, even when UL/DL configuration 7 in which no UL subframe is configured is used, it still becomes possible to transmit uplink control information (UCI), higher layer control signals and UL data (user data) by using special subframes. As a result of this, even if the mode of use of the radio communication system is stand-alone and/or dual connectivity, it is still possible to use UL/DL configuration 7 adequately.

Note that the special subframe configuration to introduce anew is not limited to one type. It is equally possible to provide a number of special subframe configurations in which the UpPTS is increased to three symbols or more. Also, although an extended UpPTS has only to be at least three symbols or more, an extended UpPTS is preferably four symbols or more, and, even more preferably, five symbols or more. Also, when an extended UpPTS is made four symbols or more, it is preferable to configure a DMRS for the PUSCH in the tenth symbol in the special subframe. Also, a structure may also be employed here in which special subframe configuration 10 is newly introduced only when UL/DL configuration 7 is used.

Furthermore, when an extended UpPTS is provided, the length of the GP of the special subframe can be configured in accordance with the cell radius. In existing special subframe configurations, the length of the GP (the number of GP symbols) is 10/9/6/4/3/2/1 in normal CPs, and 8/7/5/3/2/1 in extended CPs.

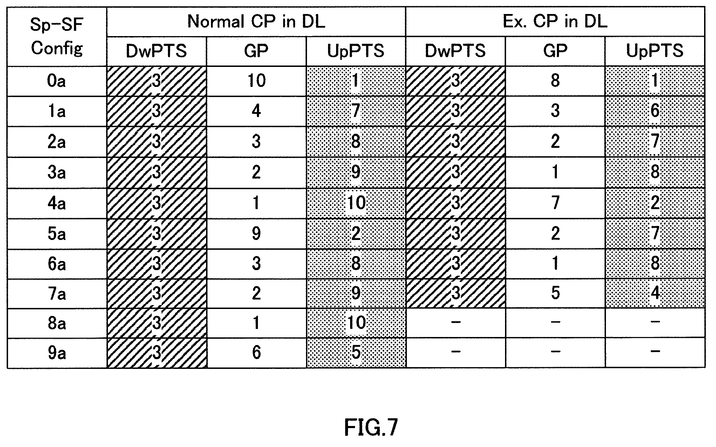

So, in existing special subframe configurations, it is equally possible to expand the number of UpPTS symbols without changing the length of the GP. For example, given existing special subframe configurations 0 to 9, it is possible to fix the number of DwPTS symbols to a predetermined value (for example, three symbols) without changing the length of the GP, and allocate the rest of the symbols to the UpPTS (see FIG. 7). In the case illustrated in FIG. 7, the length of the UpPTS provided in special subframe configurations 0a to 9a is 10/9/8/7/5/2/1 in normal CPs and 8/7/6/4/2/1 in extended CPs.

Note that, although FIG. 7 shows a case where the number of DwPTS symbols is fixed to three symbols, the number of DwPTS symbols is by no means limited to this. Other fixed values than three symbols may be used, or the number of symbols may be made different in every special subframe configuration. In this way, by configuring the length of the GP to the same value as in existing special subframe configurations (that is, by maintaining existing GP lengths), it is possible to support the transmission of PUSCH signals and so on by using special subframes, without changing the cell radius. However, considering that, in TDD, synchronization signals are transmitted in the third symbol from the top of a special subframe and the maximum number of symbols of the physical downlink control channel (PDCCH) is three, it is preferable to make the number of DwPTS symbols three or more. By making such arrangements, legacy user terminals (legacy UEs), which can only recognize existing special subframe configurations, can receive synchronization signals, and connect with TDD cells of UL/DL configuration 7. Also, since the physical downlink control channel (PDCCH) field in in special subframes can be secured, it is possible to realize downlink physical layer control in these special subframes.

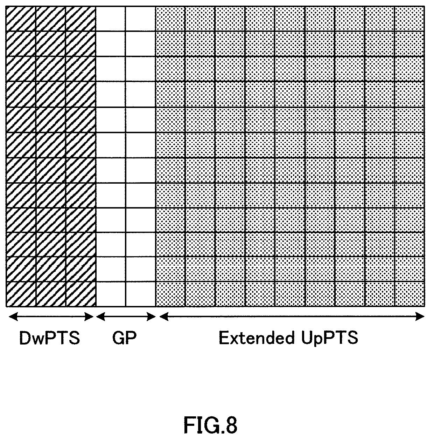

Note that, in a special subframe to include an extended UpPTS, the radio resources of the DwPTS and GP parts cannot be used in UL transmission (see FIG. 8). Consequently, in a special subframe including an extended UpPTS, the rate decreases by (DwPTS+GP)/14, compared to a normal UL subframe. Consequently, it is preferable that radio base stations and user terminals control the transmission of uplink signals using special subframes taking into account the decrease of the rate. As for the method of lowering the rate, the method (puncturing) of first generating data on the assumption that there are resources for normal uplink subframes and puncturing the data to be mapped to the DwPTS and GP parts, and the method (rate matching) of generating a signal in advance with a small amount of data to match an extended UpPTS (that is, on the assumption that data cannot be mapped to the DwPTS and GP parts) and mapping this to an extended UpPTS, may be possible. Although puncturing causes loss of information elements and error correction coding, automatic retransmission requests and so on must be configured, it is possible to simplify the system structure because data can be generated in only one rate (or in a small number of rates) regardless of the length of the extended UpPTS. On the other hand, although, in rate matching, the rate has to be changed in accordance with the length of the extended UpPTS and there is a possibility that the system structure becomes complex, it is still possible to realize communication of higher reliability because no loss of information elements is caused.

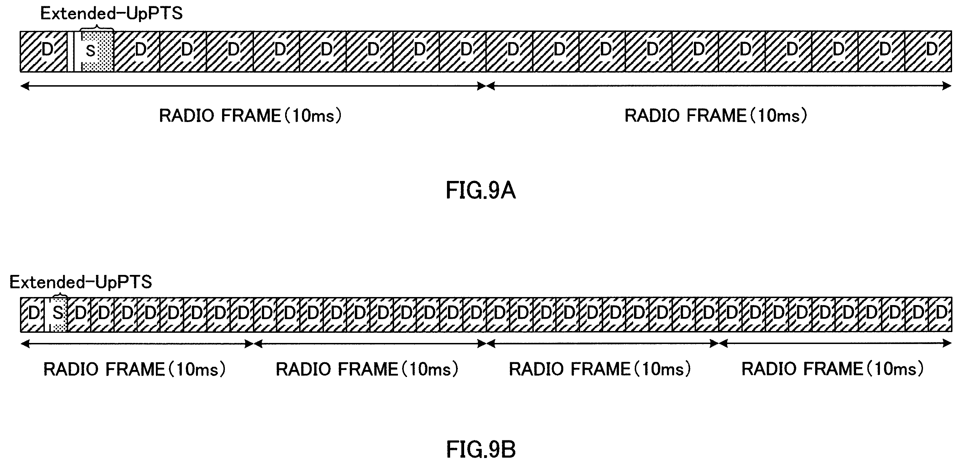

Also, although a structure has been shown above with the UL/DL configuration 7 of FIG. 3B in which one special subframe is configured in one radio frame (10 ms), the present embodiment is by no means limited to this. For example, a structure may be employed here in which one or a plurality of special subframes are inserted in a plurality of radio frames (see FIGs. 9). FIG. 9A shows a case in which only one special subframe with an extended UpPTS is configured in two frames (10ms×2). Also, FIG. 9B shows a case where only one special subframe with an extended UpPTS is configured in four frames (10ms×4).

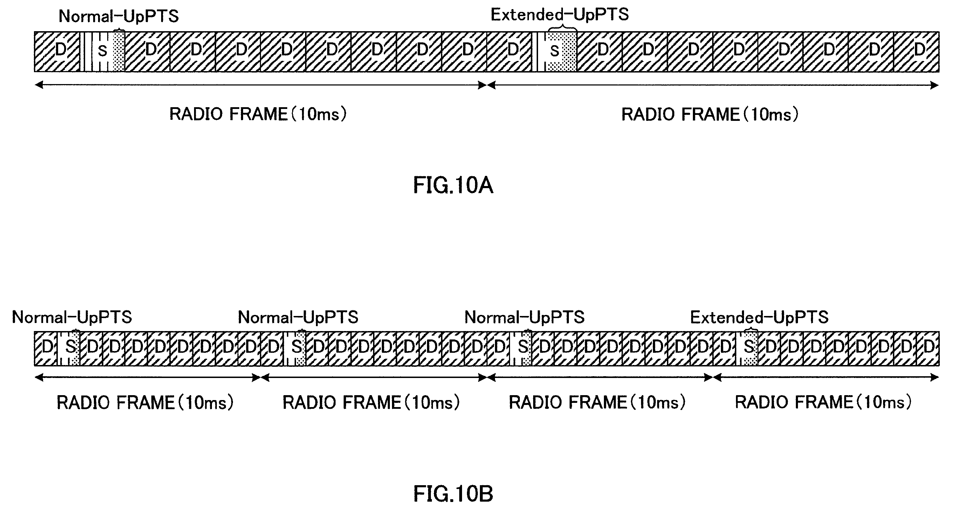

Alternatively, it is equally possible to configure existing special subframes and special subframes with an extended UpPTS in a plurality of radio frames. When doing so, it is possible to insert existing special subframes and special subframes with an extended UpPTS in different timings and cycles (see FIGs. 10). FIG. 10A shows a case where, when there are two frames (10ms×2), an existing special subframe (normal UpPTS) is configured in the first frame, and a special subframe with an extended UpPTS is configured in the second frame. FIG. 10B shows a case where, when there are four frames (10ms×4), existing special subframes are configured in the first frame to the third frame, and a special subframe with an extended UpPTS is configured in the fourth frame.

As shown in above FIG. 9B, when only one special subframe with an extended UpPTS is inserted in multiple radio frames, it is possible to assume a structure in which the location of the special subframe in time can be adequately configured. For example, the special subframe may be configured in a location determined in advance. Alternatively, the location of the special subframe in time may be reported to user terminals by using cell-specific signaling of broadcast information and so on. Alternatively, it is also possible to report the location of the special subframe in time to user terminals by using RRC signaling and/or user terminal-specific (UE-specific) signaling of L1/L2 control signals and so on. Alternatively, a structure may be used in which the special subframe is configured in a location based on the subframe number that is acquired from synchronization information. Alternatively, combinations of these may be used to send reports to user terminals.

In this way, by adequately configuring the locations of special subframes in time, it is possible to control the amount of UL resources, flexibly, depending on the ratio of UL traffic and DL traffic. Also, as shown in above FIG. 10B, it is possible to likewise configure the locations of special subframes in time, adequately, when special subframes with an extended UpPTS are configured in a long cycle.

### (Second Example)

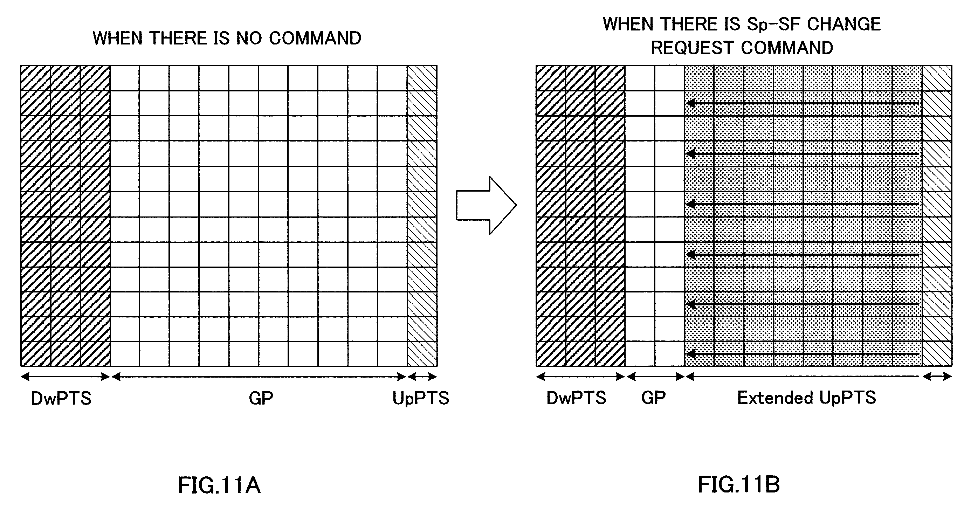

A case will be described with a second example where a user terminal to use a predetermined special subframe configuration changes the special subframe configuration of TDD cells based on information that is reported on the downlink. To be more specific, a case will be described with reference to FIGs. 11 where the lengths of the GP and the UpPTS in a special subframe configuration are changed based on a special subframe configuration change request signal that is reported on the downlink.

FIG. 11A shows a case where a user terminal uses an existing special subframe configuration when there is no predetermined command (special subframe configuration change request signal) from a radio base station. That is, a user terminal uses an existing special subframe configuration, like legacy terminals (Rel. 8-11 UEs) do, unless there is a predetermined command (special subframe configuration change request signal) from a radio base station. In his case, the user terminal operates on the assumption that the special subframe configuration is configured in advance by broadcast information, RRC signaling and so on. FIG. 11A shows a case where a special subframe configuration 0 (DwPTS: GP: UpPTS = 3: 10: 1) is used.

FIG. 11B shows a case where a user terminal having received a special subframe configuration change request signal changes the length of the GP and the length of the UpPTS. To be more specific, control is executed so that the length of the UpPTS is extended to three symbols or more and the number of GP symbols is reduced by the number of UpPTS symbols extended. The special subframe configuration change request signal can be reported from the radio base station to the user terminal by using a downlink control signal (for example, a UL grant).

FIG. 11B shows a case where the special subframe configuration is changed to DwPTS: GP: UpPTS = 3: 2: 9 in response to a special subframe configuration change request signal. That is, the length of the UpPTS and the length of the GP are switched and controlled, without changing the length of the DwPTS.

Information about the length of the UpPTS to extend can be reported to the user terminal in advance by using broadcast signals including MIB, SIB and so on, and/or by using higher layer signaling such as RRC signaling, and so on. When the user terminal receives a command to change the special subframe configuration in a physical layer control signal (for example, a UL grant and so on), the user terminal extends the UpPTS in a special subframe that is configured in a predetermined timing (for example, 4 ms later).

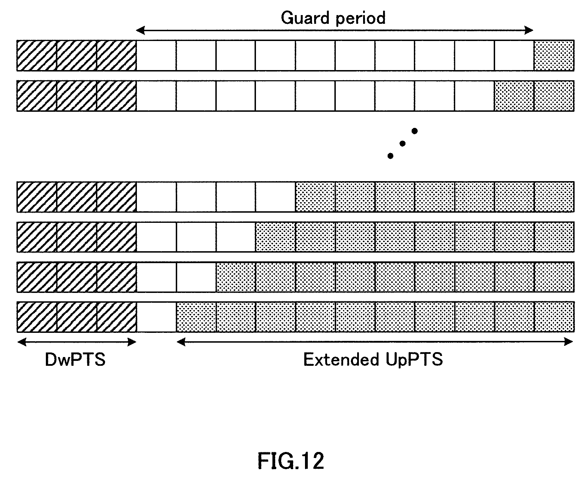

Also, it is equally possible to control the length of the UpPTS based on the timing advance value (TA value) and/or modulation and coding information (MCS) that is designated in a UL grant. The TA value refers to signaling that is commanded so as to shift the uplink transmission timing between user terminals within cells, and is configured in order to coordinate the receiving timings in base stations. The TA values which a base station presents to terminals generally assume bigger values for user terminals that are located on cell edges. When the TA value is bigger, a user terminal transmits the UpPTS at an earlier transmission timing, so it follows that user terminals located on cell edges require greater GP lengths and short GP lengths suffice for user terminals that are located in the center of the cell. Taking advantage of this, the length of the UpPTS to extend is configured long for user terminals with small TA values -- that is, user terminals that are located in the center of the cell. On the other hand, user terminals that are located on cell edges require greater GP lengths, so that the length of the UpPTS to extend is configured short (see FIG. 12). By making such arrangements, it is possible to secure the required GP length, depending on where user terminals are located, and adequately change the length of the UpPTS to extend. Also, although, generally speaking, user terminals located nearer the center of the cell show better quality and are more suitable for high-speed communication, this method makes it possible to configure longer UpPTS lengths for user terminals located nearer the center of the cell, so that it is possible to increase the amount of uplink feedback information and improve the uplink data rate, and, consequently, allow even smoother execution of high-speed communication.

Alternatively, it is equally possible to configure a length of the UpPTS to extend for each of a plurality of MCS values, and control the special subframe configuration depending on each user terminal's MCS. Although MCS is selected from a number of MCSs based on the quality of communication and conditions of user terminals, generally speaking, smaller MCSs are configured for user terminals that are located on cell edges so as to secure quality more easily by lowering the data rate, and bigger MCSs are configured for user terminals that are located in the center of the cell in order to carry out high-speed communication. As noted earlier, the length of the GP needs to be longer nearer cell edges, so that the length of the UpPTS to extend is configured shorter with smaller MCSs and the length of the UpPTS to extend is configured longer with bigger MCSs (see FIG. 12). By making such arrangements, it is possible to secure the required GP length, depending on where user terminals are located, and adequately change the length of the UpPTS to extend. Also, although, generally speaking, user terminals located nearer the center of the cell show better quality and are more suitable for high-speed communication, this method makes it possible to configure longer UpPTS lengths for user terminals located nearer the center of the cell, so that it is possible to increase the amount of uplink feedback information and improve the uplink data rate, and, consequently, allow even smoother execution of high-speed communication.

In this way, the lengths of the GP and the UpPTS are controlled in response to commands from a radio base station, so that a user terminal operates on the assumption that existing special subframes are provided, until receiving a change request signal, and can be co-present with existing terminals naturally. For example, it is possible not to transmit a change request signal to a user terminal when existing terminals are present, and transmit a change request signals when there are no existing terminals. By this means, it becomes possible to control the extension of the UpPTS depending on whether or not existing terminals are present.

Also, by controlling the lengths of the GP and the UpPTS in response to commands from a radio base station, the scheduler can control the allocation of UL resources dynamically. By this means, it is possible to determine whether or not UL resources can be allocated taking into account the interference and timing differences between user terminals.

Note that, when operation is controlled so that the length of the UpPTS changes dynamically on a per user terminal basis, cases might occur where a user terminal and a base station recognize the length of the UpPTS differently. To be more specific, when a base station commands a user terminal to change the extended UpPTS from eight symbols to ten symbols but the user terminal fails to receive the command information properly, there is a possibility that the base station will assume that the user terminal transmits the UpPTS in ten symbols, while the user terminal still transmits the UpPTS in eight symbols. If rate matching is employed, to prepare for cases like this, the base station needs to carry out demodulation and decoding based on the mappings for both the case the user terminal transmits ten symbols and the case the user terminal transmits eight symbols. On the other hand, if puncturing is employed, despite the difference that loss of information elements occurs, the user terminal employs the same mapping for either eight symbols and ten symbols, so that there is a high possibility that information can be acquired in one demodulation and once coding, no matter in how many symbols the user terminal transmits the UpPTS. In this way, when puncturing is used, it is possible to make the processing load and power consumption even lower.

### (Third Example)

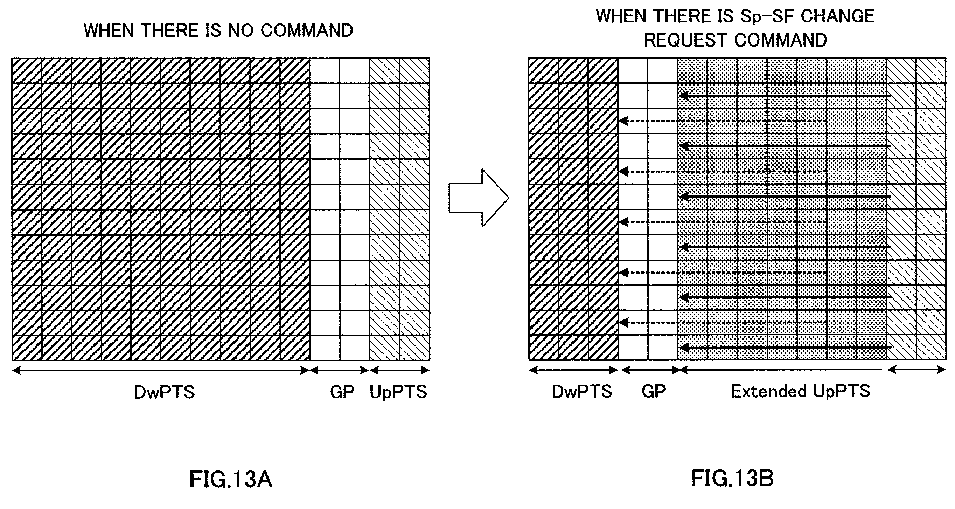

A case will be described with a third example, with reference to FIGs. 13, where a user terminal to use a predetermined special subframe configuration changes the lengths of the GP and the UpPTS in a special subframe configuration based on a special subframe configuration change request signal that is reported on the downlink.

FIG. 13A shows a case where a user terminal uses an existing special subframe configuration when there is no special subframe configuration change request command from a radio base station. That is, unless a special subframe configuration change request signal is received, the user terminal uses an existing special subframe configuration like legacy terminals (Rel. 8-11 UEs) do. FIG. 13A shows a case where special subframe configuration 7 (DwPTS: GP: UpPTS = 10: 2: 2) is used.

FIG. 13B shows a case where a user terminal having received a special subframe configuration change request signal changes the length of the DwPTS and the length of the UpPTS. To be more specific, control is executed so that the length of the UpPTS is extended to three symbols or more, and the number of DwPTS symbols is reduced by the number of UsPTS symbols extended. The special subframe configuration change request signal can be reported from the radio base station to the user terminal by using a downlink control signal (for example, a UL grant).

FIG. 13B shows a case where the special subframe configuration is changed to DwPTS: GP: UpPTS = 3: 2: 9 in response to a special subframe configuration change request signal. That is, the length of the UpPTS and the length of the DwPTS are switched and controlled without changing the length of the GP.

As in the above-described second example, information about the length of the UpPTS to extend can be reported to the user terminal in advance by using broadcast signals including MIB, SIB and so on, and/or by using higher layer signaling such as RRC signaling, and so on. When the user terminal receives a command to change the special subframe configuration in a physical layer control signal (for example, a UL grant and so on), the user terminal extends the UpPTS in a special subframe that is configured in a predetermined timing (for example, 4 ms later).

In this way, by switching and controlling the lengths of the DwPTS and the UpPTS in a special subframe in response to a command from a radio base station, it is possible to control resources flexibly in accordance with DL traffic and UL traffic. For example, a user terminal may dynamically switch and control the subframes to receive the PDSCH (in which the UpPTS is short and UL data cannot be transmitted) and the subframes in which the UpPTS is long and UL data can be transmitted, depending on whether or not a change request signal is received.

Also, by fixing the length of the GP and switching and controlling the lengths of the UpPTS and the DwPTS, it is possible to control interference by using this GP, even when the method is employed in existing cells. That is to say, in existing cells that are configured taking into account the GP lengths for special subframe configurations, it is possible to prevent producing interference and so on even when a special subframe with an extended UpPTS is employed.

### (Fourth Example)

The operation timing control pertaining to uplink signals to transmit by using special subframes in which the length of the UpPTS is extended will be described with a fourth example.

In existing LTE, the transmission of PUCCH signals and PUSCH signals using special subframes is not supported, and only the transmission (DL allocation) of PDCCH signals and PDSCH signals is supported in special subframes. Consequently, user terminals operate on the assumption that special subframes are DL subframes. That is, existing LTE stipulates no timing control for operations pertaining to uplink signals that are transmitted in special subframes (for example, DL HARQ feedback, PUSCH transmission in response to a UL grant, PHICH reception (UL HARQ) in response to the PUSCH and so on).

When the timings of operations pertaining to uplink signals to transmit in special subframes are not configured properly, dynamic scheduling and/or HARQ cannot be applied to special subframes, which makes adequate execution of uplink communication difficult.

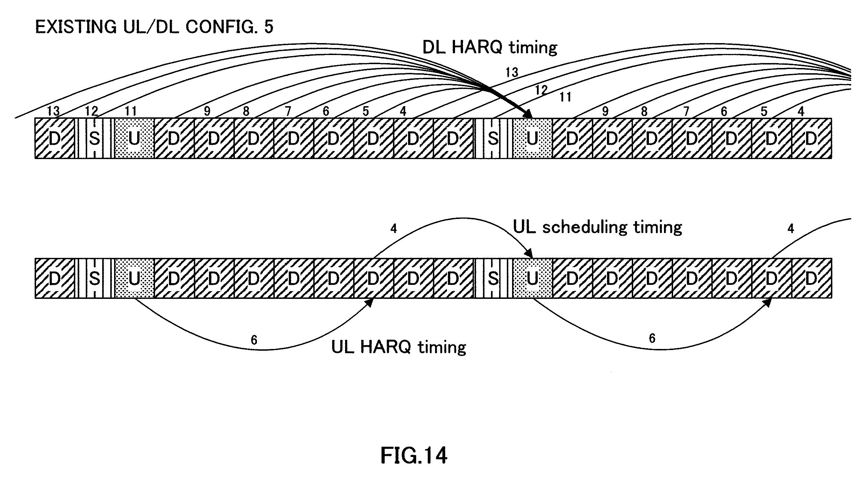

The present inventors have focused on the fact that, assuming that existing special subframes are DL subframes, the UL/DL ratio in existing UL/DL configuration 5 is DL: UL = 9: 1 (see FIG. 14). FIG. 14 shows the timings of operations pertaining to uplink signals to transmit in UL subframes of existing UL/DL configuration 5 (for example, DL HARQ feedback, PUSCH transmission in response to a UL grant, PHICH reception (UL HARQ) in response to the PUSCH and so on).

Furthermore, the present inventors have focused on the fact that special subframes in which the length of the UpPTS is extended can be used as UL subframes. In this case, the UL/DL ratio in special subframe configurations including an extended UpPTS can be seen as DL: UL = 9: 1. So, the present inventors have come up with the idea of using the mechanism of existing UL/DL configuration 5 when transmitting uplink signals by using special subframes in which the length of the UpPTS is extended.

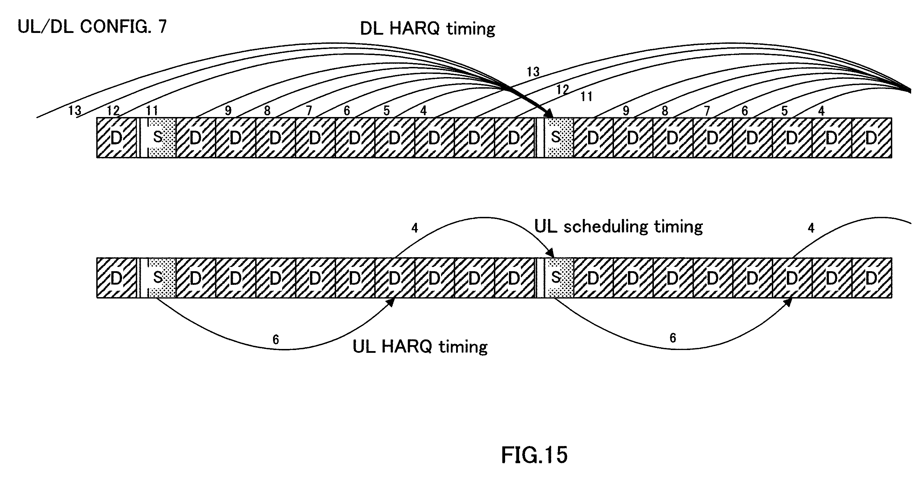

FIG. 15 shows timing control for operations pertaining to uplink signals to transmit in special subframes (UL subframes) of UL/DL configuration 7 according to the present embodiment (for example, DL HARQ feedback, PUSCH transmission in response to a UL grant, PHICH reception (UL HARQ) in response to the PUSCH and so on). In FIG. 15, the same mechanism as the DL/UL HARQ timing and the UL scheduling timing of existing UL/DL configuration 5 is used. Note that, in FIG. 15, compared to existing UL/DL configuration 5, the subframes numbers corresponding to respective operation timings are shifted by -1.

In this way, according to the present embodiment, when UL/DL configuration 7 is employed, the timings of operations pertaining to uplink signals to transmit in special subframes in which the length of the UpPTS is extended are controlled by using the mechanism of existing UL/DL configuration 5. By this means, it is only necessary to apply a predetermined offset to the HARQ timing and the UL scheduling timing stipulated in Rel. 8 (that is, apply a shift of -1 to subframes), so that new UL/DL configuration 7 can be applied to existing user terminals easily.

### (Structure of Radio Communication System)

Now, an example of a radio communication system according to the present embodiment will be described in detail below.

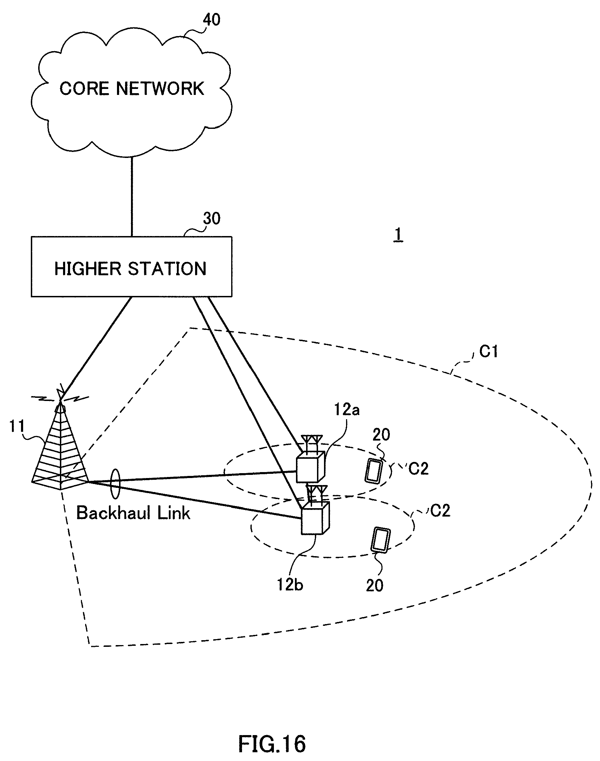

FIG. 16 is a diagram to show a schematic structure of a radio communication system according to the present embodiment. Note that the radio communication system shown in FIG. 16 is, for example, an LTE system or a system to incorporate SUPER 3G. This radio communication system can adopt carrier aggregation (CA) to group a plurality of fundamental frequency blocks (component carriers) into one, where the LTE system bandwidth constitutes one unit. Also, this radio communication system may be referred to as "IMT-advanced," or may be referred to as "4G," "FRA (Future Radio Access)," etc.

The radio communication system 1 shown in FIG. 16 includes a radio base station 11 that forms a macro cell C1, and radio base station s 12a and 12b that form small cells C2, which are placed within the macro cell C1 and which are narrower than the macro cell C1. Also, user terminals 20 are placed in the macro cell C1 and in each small cell C2. The user terminals 20 can connect with both the radio base station 11 and the radio base stations 12. Also, intra-base station CA (intra-eNB CA) or inter-base station CA (inter-eNB CA) is applied between the radio base station 11 and the radio base stations 12. Also, for CA between the radio base station 11 and the radio base stations 12, TDD-TDD CA or TDD-FDD CA and so on can be applied.

Between the user terminals 20 and the radio base station 11, communication is carried out using a carrier of a relatively low frequency band (for example, 2 GHz) and a narrow bandwidth (referred to as, for example, "existing carrier," "legacy carrier" and so on). Meanwhile, between the user terminals 20 and the radio base stations 12, a carrier of a relatively high frequency band (for example, 3.5 GHz and so on) and a wide bandwidth may be used, or the same carrier as that used in the radio base station 11 may be used. A new carrier type (NCT) may be used as the carrier type between the user terminals 20 and the radio base stations 12. Between the radio base station 11 and the radio base station s 12 (or between the radio base stations 12), wire connection (optical fiber, the X2 interface and so on) or wireless connection is established.

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with the higher station apparatus via the radio base station 11.

Note that the radio base station 11 is a radio base station having a relatively wide coverage, and may be referred to as an "eNodeB," a "macro base station," a "transmitting/receiving point" and so on. Also, the radio base stations 12 are radio base stations having local coverages, and may be referred to as "small base stations," "pico base stations," "femto base stations," "home eNodeBs," "micro base stations," "transmitting/receiving points" and so on. Hereinafter the radio base stations 11 and 12 will be collectively referred to as a "radio base station 10," unless specified otherwise. The user terminals 20 are terminals to support various communication schemes such as LTE, LTE-A and so on, and may be either mobile communication terminals or stationary communication terminals.

In the radio communication system, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier transmission scheme to perform communication by dividing a frequency band into a plurality of narrow frequency bands (subcarriers) and mapping data to each subcarrier. SC-FDMA is a single-carrier transmission scheme to mitigate interference between terminals by dividing the system band into bands formed with one or continuous resource blocks per terminal, and allowing a plurality of terminals to use mutually different bands.

Now, communication channels used in the radio communication system shown in FIG. 16 will be described. Downlink communication channels include a PDSCH (Physical Downlink Shared Channel), which is used by each user terminal 20 on a shared basis, and downlink L1/L2 control channels (PDCCH, PCFICH, PHICH and enhanced PDCCH). User data and higher control information are communicated by the PDSCH. Scheduling information for the PDSCH and the PUSCH and so on are communicated by the PDCCH (Physical Downlink Control Channel). The number of OFDM symbols to use for the PDCCH is communicated by the PCFICH (Physical Control Format Indicator Channel). HARQ ACKs/NACKs for the PUSCH are communicated by the PHICH (Physical Hybrid-ARQ Indicator Channel). Also, the scheduling information for the PDSCH and the PUSCH and so on may be communicated by the enhanced PDCCH (EPDCCH) as well. This EPDCCH is frequency-division-multiplexed with the PDSCH (downlink shared data channel).

Uplink communication channels include a PUSCH (Physical Uplink Shared CHannel), which is used by each user terminal 20 on a shared basis as an uplink data channel, and a PUCCH (Physical Uplink Control CHannel), which is an uplink control channel. User data and higher control information are communicated by this PUSCH. Also, downlink radio quality information (CQI: Channel Quality Indicator), ACKs/NACKs and so on are communicated by the PUCCH, the PUSCH and so on (transmitted simultaneously with user data).

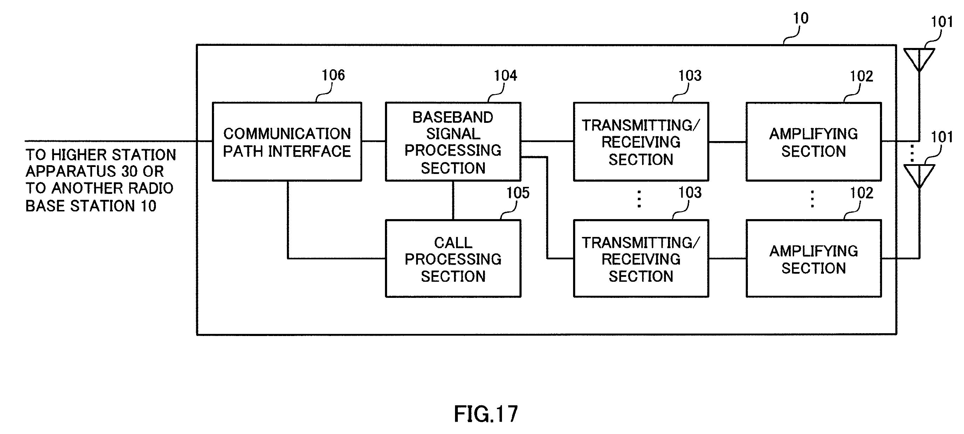

FIG. 17 is a diagram to show an overall structure of a radio base station 10 (which may be either a radio base station 11 or 12) according to the present embodiment. The radio base station 10 has a plurality of transmitting/receiving antennas 101 for MIMO communication, amplifying sections 102, transmitting/receiving sections 103, a baseband signal processing section 104, a call processing section 105 and a communication path interface 106.

User data to be transmitted from the radio base station 10 to a user terminal 20 on the downlink is input from the higher station apparatus 30 to the baseband signal processing section 104, via the communication path interface 106.

In the baseband signal processing section 104, a PDCP layer process, division and coupling of user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a precoding process are performed, and the result is forwarded to each transmitting/receiving section 103. Furthermore, downlink control channel signals are also subjected to transmission processes such as channel coding and an inverse fast Fourier transform, and forwarded to each transmitting/receiving section 103.

Also, the baseband signal processing section 104 reports, to the user terminal 20, control information for allowing communication in the cell, through higher layer signaling (RRC signaling, broadcast signal and so on). The information for allowing communication in the cell may include, for example, information about the UL/DL configuration to use in TDD cells, information about special subframes, the uplink or downlink system bandwidth, feedback resource information, and so on. The information about special subframes may include the special subframe configuration to use, a special subframe configuration change command, the details of change when change is made to special subframes (information about the extension of the UpPTS), and so on.

Each transmitting/receiving section 103 converts the baseband signals, which are pre-coded and output from the baseband signal processing section 104 on a per antenna basis, into a radio frequency band. The amplifying sections 102 amplify the radio frequency signals having been subjected to frequency conversion, and transmit the signals through the transmitting/receiving antennas 101. The transmitting/receiving sections 103 function as transmission sections that transmit information about the UL/DL configuration to use in TDD cells, information about special subframes and so on, through higher layer signaling (broadcast signals, RRC signaling and so on).

On the other hand, as for data to be transmitted from the user terminals 20 to the radio base station 10 on the uplink, radio frequency signals that are received in the transmitting/receiving antennas 101 are each amplified in the amplifying sections 102, converted into the baseband signal through frequency conversion in each transmitting/receiving section 103, and input in the baseband signal processing section 104.

In the baseband signal processing section 104, the user data that is included in the input baseband signal is subjected to an FFT process, an IDFT process, error correction decoding, a MAC retransmission control receiving process, and RLC layer and PDCP layer receiving processes, and the result is forwarded to the higher station apparatus 30 via the communication path interface 106. The call processing section 105 performs call processing such as setting up and releasing communication channels, manages the state of the radio base stations 10 and manages the radio resources.

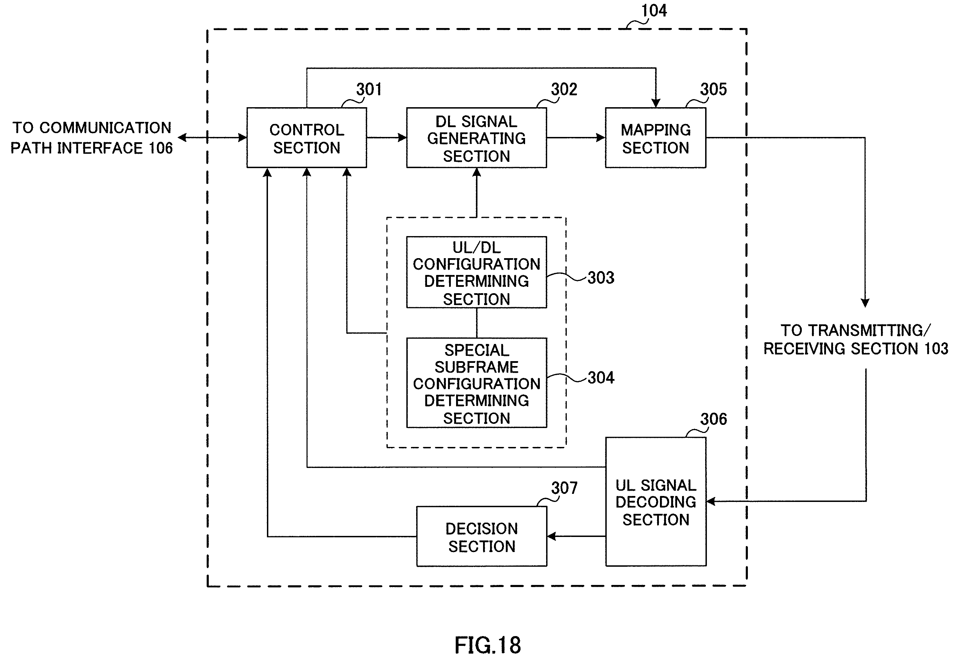

FIG. 18 is a diagram to show a principle functional structure of the baseband signal processing section 104 provided in the radio base station 10 according to the present embodiment As shown in FIG. 18, the baseband signal processing section 104 provided in the radio base station 10 is comprised at least of a control section 301, a DL signal generating section 302, a UL/DL configuration determining section 303, a special subframe configuration determining section 304, a mapping section 305, a UL signal decoding section 306 and a decision section 307.

The control section 301 controls the scheduling of downlink user data that is transmitted in the PDSCH, downlink control information that is transmitted in the PDCCH and/or the enhanced PDCCH (EPDCCH), downlink reference signals and so on. Also, the control section 301 controls the scheduling of uplink data that is transmitted in the PUSCH, uplink control information that is transmitted in the PUCCH or the PUSCH, and uplink reference signals (allocation control). Information about the allocation control of uplink signals (uplink control signals and uplink user data) is reported to user terminals by using downlink control signals (DCI).

To be more specific, the control section 301 controls the allocation of radio resources to downlink signals and uplink signals based on command information from the higher station apparatus 30, feedback information from each user terminal 20 and so on. That is, the control section 301 functions as a scheduler. Also, when the radio base station 10 uses TDD, the allocation of downlink signals and uplink signals to each subframe is controlled based on the UL/DL configuration to use and/or the special subframe configuration.

When UL/DL configuration 7 to include special subframes with an extended UpPTS is used, the control section 301 controls the uplink signals to allocate to the extended UpPTS of the special subframes. For example, the control section 301 controls the allocation of uplink signals such as PRACH signals, message 3 in random access procedures, higher layer control signals, downlink HARQ-ACK, CQI, SR, SRS and so on, by using the extended UpPTS of special subframes.

The DL signal generating section 302 generates downlink control signals (PDCCH signals and/or EPDCCH signals) and downlink data signals (PDSCH signals) that are determined to be allocated by the control section 301. To be more specific, based on commands from the control section 301, the DL signal generating section 302 generates DL assignments, which report downlink signal allocation information, and UL grants, which report uplink signal allocation information.

Also, the DL signal generating section 302 generates information about the UL/DL configuration determined in the UL/DL configuration determining section 303, information about the special subframe configuration determined in the special subframe configuration determining section 304. When the DL signal generating section 302 commands the user terminal to make a change to special subframes (see above FIGs. 11 and FIG. 12), the DL signal generating section generates a special subframe change request signal as a UL grant.

The UL/DL configuration determining section 303 determines the UL/DL configuration to use in TDD taking into account UL and DL traffic and so on. The UL/DL configuration determining section 303 can select a predetermined UL/DL configuration from a plurality of UL/DL configurations including UL/DL configurations for DL communication (such as above-described UL/DL configuration 7) (see FIG. 3B and so on). Note that the UL/DL configuration determining section 303 can determine the UL/DL configuration based on information from the higher station apparatus 30 and so on.

The special subframe configuration determining section 304 determines the special subframe configuration. Note that the special subframe configuration determining section 304 can determine the UL/DL configuration based on information from the higher station apparatus 30 and so on. When the above-described first example is employed, the special subframe configuration determining section 304 determines a predetermined special subframe configuration from a table, in which special subframe configuration 10 to use an extended UpPTS is newly provided, in addition to existing special subframe configurations 0 to 9 (see above FIG. 6). Also, the special subframe configuration determining section 304 may determine predetermined special subframe configurations for existing special subframe configurations 0 to 9, from a table including extended UpPTSs, without changing the length of the GP (see above FIG. 7).

When the above-described second example is employed, the special subframe configuration determining section 304 controls the extension of the length of the UpPTS (reduction of the length of the GP) in special subframe configurations. For example, the special subframe configuration determining section 304 extends the length of the UpPTS to three symbols or more, and, furthermore, lowers the number of GP symbols by the number of UpPTS symbols extended. Also, when the above-described third example is employed, the special subframe configuration determining section 304 controls the extension of the length of the UpPTS in special subframe configurations (reduction of the length of the DwPTS). For example, the special subframe configuration determining section 304 extends the length of the UpPTS to three symbols or more, and, furthermore, lowers the number of DwPTS symbols by the number of UpPTS symbols extended.

The mapping section 305 controls the allocation of the downlink control signals and the downlink data signals generate in the DL signal generating section 302 to radio resources based on commands from the control section 301.

The UL signal decoding section 306 decodes the feedback signals (delivery acknowledgement signals and so on) transmitted from the user terminal, and outputs the results to the control section 301. Also, the UL signal decoding section 306 decodes the uplink data signals transmitted from the user terminal through an uplink shared channel (PUSCH), and outputs the results to the decision section 307. The decision section 307 makes retransmission control decisions (ACKs/NACKs) based on the decoding results in the UL signal decoding section 306, and, furthermore, outputs the results to the control section 301.

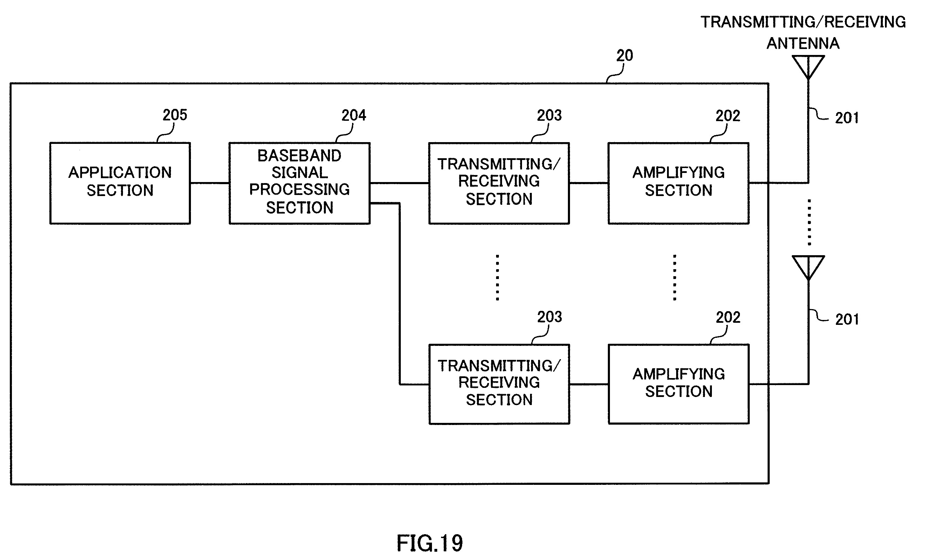

FIG. 19 is a diagram to show an overall structure of a user terminal 20 according to the present embodiment. The user terminal 20 has a plurality of transmitting/receiving antennas 201 for MIMO communication, amplifying sections 202, transmitting/receiving sections (receiving sections) 203, a baseband signal processing section 204 and an application section 205.

As for downlink data, radio frequency signals that are received in the plurality of transmitting/receiving antennas 201 are each amplified in the amplifying sections 202, and subjected to frequency conversion and converted into the baseband signal in the transmitting/receiving sections 203. This baseband signal is subjected to receiving processes such as an FFT process, error correction decoding and retransmission control, in the baseband signal processing section 204. In this downlink data, downlink user data is forwarded to the application section 205. The application section 205 performs processes related to higher layers above the physical layer and the MAC layer. Also, in the downlink data, broadcast information is also forwarded to the application section 205.

When the user terminal 20 connects with a TDD cell, the transmitting/receiving sections 203 function as receiving sections to receive information about the UL/DL configuration, information about special subframes, and so on. The information about special subframes may include the special subframe configuration to employ, a special subframe configuration change request, the details of change when change is made to special subframes (information about the extension of the UpPTS) and so on.

Meanwhile, uplink user data is input from the application section 205 to the baseband signal processing section 204. In the baseband signal processing section 204, a retransmission control (H-ARQ (Hybrid ARQ)) transmission process, channel coding, precoding, a DFT process, an IFFT process and so on are performed, and the result is forwarded to each transmitting/receiving section 203. The baseband signal that is output from the baseband signal processing section 204 is converted into a radio frequency band in the transmitting/receiving sections 203. After that, the amplifying sections 202 amplify the radio frequency signals having been subjected to frequency conversion, and transmit the resulting signals from the transmitting/receiving antennas 201.

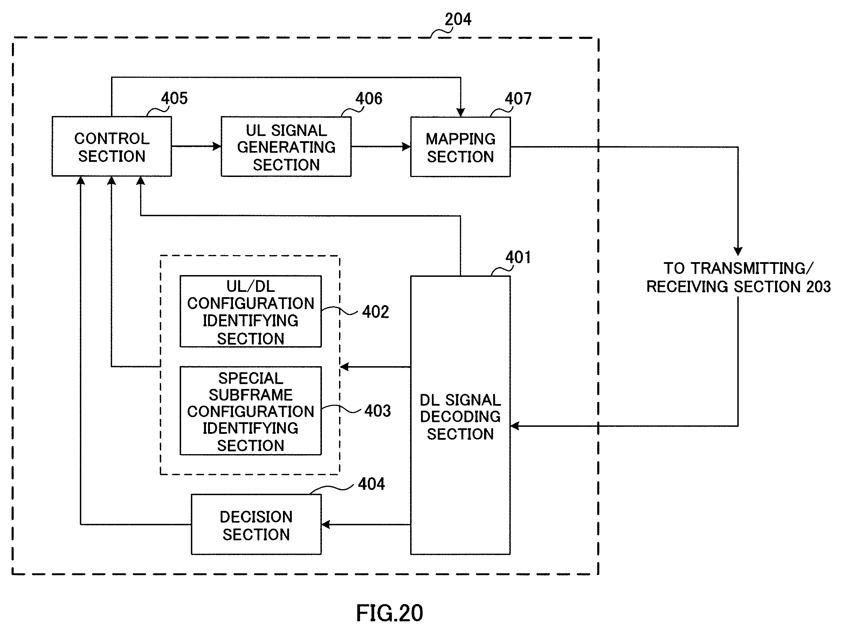

FIG. 20 is a diagram to show a principle functional structure of the baseband signal processing section 204 provided in the user terminal 20. As shown in FIG. 20, the baseband signal processing section 204 provided in the user terminal 20 is comprised at least of a DL signal decoding section 401, a UL/DL configuration identifying section 402, a special subframe configuration identifying section 403, a decision section 404, a control section 405, a UL signal generating section 406 and a mapping section 407.

The DL signal decoding section 401 decodes the downlink control signals (PDCCH signals) transmitted in the downlink control channel (PDCCH), and outputs scheduling information (information regarding the allocation to uplink resources) to the control section 405. Also, the DL signal decoding section 401 decodes the downlink data signals transmitted in the downlink shared channel (PDSCH), and outputs the results to the decision section 404. The decision section 404 makes retransmission control decisions (ACKs/NACKs) based on the decoding results in the DL signal decoding section 401, and, furthermore, outputs the results to the control section 405.

If information about the UL/DL configuration or information about special subframes is included in a downlink signal that is received, the DL signal decoding section 401 outputs the decoded information to the UL/DL configuration identifying section 402 and the special subframe configuration identifying section 403.

The UL/DL configuration identifying section 402 identifies the UL/DL configuration which the user terminal employs based on the information about the UL/DL configuration reported from the radio base station. Also, the UL/DL configuration identifying section 402 outputs the information about the UL/DL configuration to employ, to the control section 405 and/or others.

The special subframe configuration identifying section 403 identifies the special subframe configuration the user terminal employs, based on the information about the special subframe configuration, reported from the radio base station. Also, the special subframe configuration identifying section 403 outputs the information about the UL/DL configuration to employ, to the control section 405 and/or others. When the above-described first example is employed, the special subframe configuration identifying section 403 can specify the special subframe configuration reported through broadcast information, RRC signaling and so on. For example, when the special subframe configuration identifying section 403 decides to employ special subframe configuration 10 of above FIG. 6, the subframe configuration identifying section 403 sends an output to that effect to the control section 405.

When the above-described second example or third example is employed, the special subframe configuration identifying section 403 identifies the special subframe configuration that is employed, based on a special subframe configuration change request signal included in a downlink signal (for example, a UL grant), and outputs the result to the control section 405.

The control section 405 controls the generation of uplink control signals (feedback signals) and uplink data signals based on downlink control signals (PDCCH signals) transmitted from the radio base station, retransmission control decisions with in response to the PDSCH signals received, and so on. The downlink control signals are output from the downlink control signal decoding section 407, and the retransmission control decisions are output from the decision section 409.

Also, the control section 405 controls the transmission of uplink control signals and uplink data signals based on the information about the UL/DL configuration output from the UL/DL configuration identifying section 402, the information about special subframes output from the special subframe configuration identifying section 403. For example, the control section 405 configures the UpPTS to constitute special subframes to three symbols or more and controls the allocation of uplink signals based on the information about special subframes.

When the above-described first example is employed, the control section 405 selects a predetermined special subframe configuration from a table in which the existing special subframe configurations provided in LTE systems and special subframe configurations in which the UpPTS is configured to be three symbols or more are stipulated (see above FIG. 6). Also, when the above-described second example or third example is employed, the control section 405 extends the UpPTS to constitute special subframes to three symbols or more based on a special subframe configuration change request signal that is reported on the downlink (see above FIGs. 11 and FIGs. 13). Note that control section 405 can determine the number of extended UpPTS symbols depending on the timing advance value and/or MCS (see above FIG. 12).

Also, the control section 405 also functions as a feedback control section that controls the feedback of delivery acknowledgement signals (A/N's) in response to PDSCH signals. For example, when the control section 405 feeds back uplink signals by using special subframes including an extended UpPTS, the control section 405 controls the allocation of A/N's to the UpPTS radio resources.

The UL signal generating section 406 generates uplink control signals (feedback signals such as delivery acknowledgement signals, channel state information (CSI) and so on) based on commands from the control section 405. Also, the UL signal generating section 406 generates uplink data signals based on commands from the control section 405.

The mapping section 407 (allocation section) controls the allocation of uplink control signals (delivery acknowledgement signals, etc.) and uplink data signals to radio resources (the PUCCH and the PUSCH) based on commands from the control section 405. For example, when uplink signals are fed back using special subframes including an extended UpPTS, the mapping section 407 controls the allocation of uplink control signals and uplink data signals to the UpPTS radio resources.

Now, although the present invention has been described in detail with reference to the above embodiment, it should be obvious to a person skilled in the art that the present invention is by no means limited to the embodiment described herein. The present invention can be implemented with various corrections and in various modifications, without departing from the spirit and scope of the present invention defined by the recitations of claims. For example, a plurality of examples described above may be combined and implemented as appropriate. Consequently, the description herein is only provided for the purpose of illustrating examples, and should by no means be construed to limit the present invention in any way.

The disclosure of Japanese Patent Application No. 2014-004181, filed on January 14, 2014, including the specification, drawings and abstract, is incorporated herein by reference in its entirety.

## Claims

1. A user terminal that carries out radio communication with a TDD cell, comprising:
a transmitting/receiving section that transmits and receives signals by using a UL/DL configuration, which includes a special subframe formed with a downlink time duration, a guard period and an uplink time duration, and in which DL communication is carried out in all subframes; and
a control section that configures the uplink time duration to constitute the special subframe to at least three symbols or more, and controls allocation of uplink signals.

2. The user terminal according to claim 1, wherein the control section configures the uplink time duration to constitute the special subframe to three symbols or more based on a special subframe configuration change request signal reported on downlink.

3. The user terminal according to claim 1 or claim 2, wherein the control section selects a predetermined special subframe configuration from a table, in which an existing special subframe configuration provided in an LTE system and a special subframe configuration in which the uplink time duration is configured to three symbols or more are stipulated.

4. The user terminal according to claim 1 or claim 2, wherein the control section uses a table including a special subframe configuration in which the number of guard period symbols is the same as in an existing special subframe configuration provided in an LTE system, and the uplink time duration is extended more than in the existing special subframe configuration.

5. The user terminal according to claim 1, wherein the transmitting/receiving section transmits the special subframe, in which the uplink time duration is configured to three symbols or more, once in every one radio frame or multiple radio frames.

6. The user terminal according to claim 1 or claim 2, wherein the control section uses an existing special subframe configuration provided in an LTE system, and, when a special subframe configuration change request signal is received, extends the length of the uplink time duration in the existing special subframe configuration to three symbols or more, and reduces the number of guard period symbols by the number of uplink time duration symbols extended.

7. The user terminal according to claim 1 or claim 2, wherein the control section uses an existing special subframe configuration provided in an LTE system, and, when a special subframe configuration change request signal is received, the control section extends the length of the uplink time duration in the existing special subframe configuration to three symbols or more, and reduces the number of downlink time duration symbols by the number of uplink time duration symbols extended.

8. The user terminal according to claim 1, wherein the transmitting/receiving section transmits at least one of a RACH signal, a message 3 in a random access procedure, a higher layer control signal, a delivery acknowledgement signal, channel quality information, a scheduling request signal and a channel quality measurement reference signal, by using the uplink time duration configured to three symbols or more.

9. A radio base station that communicates with a user terminal connected with at least a TDD cell, the radio base station comprising:
a selection section that selects, as a UL/DL configuration for use by the user terminal, a UL/DL configuration, which is formed with a downlink time duration, a guard period and an uplink time duration, and in which DL communication is carried out in all subframes; and
a transmission section that transmits information to command the user terminal to configure the uplink time duration to constitute the special subframe to at least three symbols or more.

10. A radio communication method in a user terminal that carries out radio communication with a TDD cell, the radio communication method comprising:
determining use of a UL/DL configuration, which is formed with a downlink time duration, a guard period and an uplink time duration, and in which DL communication is carried out in all subframes;
configuring the uplink time duration to constitute the special subframe to at least three symbols or more; and
allocating and transmitting an uplink signal in the uplink time duration that is configured to three symbols or more.
